Europäisches Patentamt

European Patent Office

Office européen des brevets

(19)

(11) **EP 1 640 981 A1**

(12) **EUROPEAN PATENT APPLICATION**
published in accordance with Art. 158(3) EPC

(43) Date of publication:
**29.03.2006 Bulletin 2006/13**

(51) Int Cl.:
***G11B 7/24*** (1968.09)

(21) Application number: **04746961.4**

(22) Date of filing: **29.06.2004**

(86) International application number:
**PCT/JP2004/009492**

(87) International publication number:
**WO 2005/004133 (13.01.2005 Gazette 2005/02)**

(84) Designated Contracting States:
**AT BE BG CH CY CZ DE DK EE ES FI FR GB GR HU IE IT LI LU MC NL PL PT RO SE SI SK TR**

(30) Priority: **01.07.2003 JP 2003270065**

(71) Applicant: **TDK Corporation**
**Chuo-ku,**
**Tokyo 103-8272 (JP)**

(72) Inventors:
• **KIKUKAWA, Takashi,**
**TDK Corporation**
**Chuo-ku, Tokyo 103-8272 (JP)**

• **FUKUZAWA, Narutoshi,**
**TDK Corporation**
**Chuo-ku, Tokyo 103-8272 (JP)**
• **KOBAYASHI, Tatsuhiro,**
**TDK Corporation**
**Chuo-ku, Tokyo 103-8272 (JP)**

(74) Representative: **Grünecker, Kinkeldey,**
**Stockmair & Schwanhäusser**
**Anwaltssozietät**
**Maximilianstrasse 58**
**80538 München (DE)**

(54) **OPTICAL RECORDING MEDIUM AND PROCESS FOR PRODUCING THE SAME, METHOD FOR RECORDING DATA ON OPTICAL RECORDING MEDIUM AND METHOD FOR REPRODUCING DATA FROM OPTICAL RECORDING MEDIUM**

(57) An optical recording device 10 of the present invention has a support substrate 11; an optical transmitting layer 12; and a first dielectric layer 31, a noble metal oxide layer 23, a second dielectric layer 32, a light absorption layer 22, a third dielectric layer 33, and a reflection layer 21, all of which are interposed, in this sequence from the optical transmitting layer, between the optical transmitting layer and the support substrate. The thickness of the support substrate 11 ranges from 0.6 mm to 2.0 mm; the thickness of the optical transmitting layer ranges from 10 $\mu$m to 200 $\mu$m; the thickness of the noble metal oxide layer ranges from 2 nm to 50 nm; the thickness of the second dielectric layer ranges from 5 nm to 100 nm; the thickness of the light absorption layer 22 ranges from 5 nm to 100 nm; and the thickness of the third dielectric layer 33 ranges from 10 nm to 140 nm. A superior characteristic can be acquired through super-resolution recording and super-resolution reproduction using an optical system for use with an optically recording medium of the next generation type.

*FIG. 2*

**Description**

<Field of the Invention>

The present invention relates to an optical recording medium and a method for fabricating the optical recording medium, and more particularly, to a super-resolution-type optical recording medium capable of forming a microrecord mark smaller than a resolution limit and reproducing data from such a record mark, as well as to a method for manufacturing the same. The present invention also relates to a method for recording data on an optical recording medium and a method for reproducing data from the optical recording medium, as well as to a method for recording data on an super-resolution-type optical recording medium and a method for reproducing data from the same.

<Background Art>

An optical recording medium typified by a CD (Compact Disk) or a DVD (Digital Versatile Disk) has recently been widely used as a recording medium for recording large amounts of digital data.

Among CDs, a CD of a type (CD-ROM) which does not allow writing or rewriting of data has a structure realized by stacking a reflection layer and a protective layer on an optical transmitting substrate having a thickness of about 1.2 mm. A laser beam having a wavelength of about 780 nm is irradiated onto the reflection layer by way of the optical transmitting substrate, thereby reproducing data. Among CDs, a CD of a type (CD-R) which allows once-writing of data and a CD of another type (CD-RW) which allows rewriting of data have a structure realized by addition of a recording layer between the optical transmitting substrate and the reflection layer. Recording and reproduction of data can be performed by radiating a laser beam having a wavelength of about 780 nm onto the recording layer by way of the optical transmitting substrate.

In connection with the CD, an objective lens having a numerical aperture of about 0.45 is used for focusing a laser beam. As a result, a beam spot size of the laser beam on the reflection layer or the recording layer is narrowed to a value of about 1.6 $\mu$m. Thereby, the CD achieves storage capacity of about 700 MB and a data transfer rate of about 1 Mbps at a standard linear velocity (about 1.2 m/sec.).

Among DVDs, a DVD (DVD-ROM) of a type which does not allow writing or rewriting of data has a structure achieved by laminating together a multilayered body and a dummy substrate of a thickness of about 0.6 mm with an adhesive layer sandwiched therebetween, wherein the multilayered body is formed by stacking a reflection layer and a protective layer on an optical transmitting substrate having a thickness of about 0.6 mm. Data can be reproduced by radiating a laser beam having a wavelength of about 635 nm onto the reflection layer by way of the optical transmitting substrate. Meanwhile, among DVDs, a DVD of a type (DVD-R, or the like) which allows once-writing of data and a DVD of another type (DVD-RW, or the like) which allows rewriting of data have a structure realized by addition of a recording layer between an optical transmitting substrate and a reflection layer. Recording or reproduction of data can be carried out by radiating a laser beam having a wavelength of about 635 nm onto the recording layer by way of the optical transmitting substrate.

In connection with the DVD, an objective lens having a numerical aperture of about 0.6 is used for focusing a laser beam. As a result, a beam spot size of the laser beam on the reflection layer or the recording layer is narrowed to about 0.93 $\mu$m. As mentioned above, a laser beam whose wavelength is shorter than that of the laser beam used for the CD and an objective lens whose numerical aperture is greater than that of the objective lens used for the CD are used for recording or reproducing data on or from the DVD. A beam spot size, which is smaller than that achieved for the CD, is realized. Thereby, the DVD achieves storage capacity of about 4.7 GB/side and a data transfer rate of about 11 Mbps at a standard linear velocity (about 3.5 m/sec.).

An optical recording medium whose data recording capacity is greater than that of a DVD and which can realize a data transfer rate exceeding that of the DVD has recently been proposed. In order to attain high-capacity and a high data transfer rate in such an optical recording medium of the next generation type, a laser beam having a wavelength of about 405 nm and an objective lens having a numerical aperture of about 0.85 are used. A beam spot size of the laser beam is narrowed to a value of about 0.43 $\mu$m, and storage capacity of about 25 GB/side and a data transfer rate of about 36 Mbps at a standard linear velocity (about 5.7 m/sec.) can be achieved.

As mentioned above, an objective lens having a very high numerical aperture is employed for the optical recording medium of the next generation. Therefore, in order to ensure a sufficient tilt margin and to prevent occurrence of a coma aberration, the optical transmitting layer, which would act as an optical path for a laser beam, is set to an extremely small thickness of about 100 $\mu$m. In the optical recording medium of the next generation, difficulties are encountered in forming various functional layers, such as a recording layer or the like, on an optical transmitting substrate as in the case of a current optical recording medium such as a CD, a DVD, or the like. There has been described use of a method for forming a reflection layer and a recording layer on a support substrate, forming a thin resin layer on the reflection layer and the recording layer by means of a spin-coating method or the like, and using the resin layer as an optical transmitting layer. Specifically, in contrast with manufacture of a current optical recording medium into which films are sequentially formed from a light entrance side, films are sequentially formed from a side opposite the light entrance side during manufacture of the optical recording medium of the next generation.

As has been described above, an increase in the capacity of an optical recording medium and an increase in a high data transfer rate are achieved chiefly by miniaturization of the beam spot size off the laser beam. Consequently, in order to achieve any further increase in the capacity and the high data transfer rate, the beam spot size must be reduced further. However, if the wavelength of the laser beam is shortened further, the amount of laser energy absorbed by the optical transmitting layer will increase abruptly, and secular deterioration of the optical transmitting layer will become greater. For these reasons, further shortening of the wavelength is difficult. Moreover, in consideration of difficulty in lens design or assurance of a tilt margin, any further increase in the numerical aperture of the objective lens is also difficult. Shortly, any further reduction in the beam spot size of the laser beam can be said to be extremely difficult.

With this being the case, a super-resolution-type optical recording medium has recently been proposed as another attempt to achieve increased capacity and an increased data transfer rate. The super-resolution-type optical recording medium designates formation of a minute record mark exceeding a resolution limit and an optical recording medium which enables reproduction of data from such a record mark. If such an optical recording medium is used, increased capacity and an increased data transfer rate can be achieved without reducing a beam spot size.

More specifically, when the wavelength of a laser beam is taken as $\lambda$ and a numerical aperture of the objective lens is taken as NA, a diffraction limit d1 is given by

$$d1 = \lambda/2NA.$$

Therefore, in the case of an optical recording medium of a type in which data are expressed by the length of a record mark-and-blank region; namely, a distance between edges, as in the case of a CD or a DVD, a resolution limit d2 of a single signal is given by

$$d2 = \lambda/4NA.$$

In an ordinary optical recording medium which is not an super-resolution type, if the length of the shortest record mark and that of the shortest blank region are less than the resolution limit, resolution of the record mark from the blank region will become impossible. In contrast, in the super-resolution-type optical recording medium, a recording mark and a blank region, whose lengths are less than the resolution limitresolution limit, can be utilized. Hence, increased capacity and an increased data transfer rate can be attained without reducing the beam spot size.

An super-resolution-type optical recording medium called a "Super RENS" (Super Resolution Near-Field Structure) has hitherto been proposed as a super-resolution-type optical recording medium (see, Non-Patent Document 1). This optical recording medium employs a phase-change material layer and a reproduction layer formed from a metal oxide. When the optical recording medium is exposed to a laser beam, the metal oxide forming the reproduction layer is decomposed by a high-energy portion of the beam spot center. The laser beam is considered to be scattered by metal fine particles derived from decomposition of the metal oxide, to thus generate near-field light. Consequently, the near-field light is irradiated locally to the phase-change material layer. Hence, super-resolution recording and super-resolution reproduction can be performed by utilization of the phase change. When the laser beam has gone away from the phase-change material layer, metal and oxygen, which have resulted from decomposition of the reproduction layer, are again combined together, to thus return to the original metal oxide. Therefore, repeated rewriting is considered feasible.

However, research conducted by the present inventors has revealed that a change in the phase of a phase-change material layer of the super-resolution-type optical recording medium called a "Scattering-type Super RENS" hardly appears as a signal, and that decomposition of the reproduction layer is irreversible. Specifically, the research has revealed that the super-resolution-type optical recording medium called a "Scattering-type Super RENS" can be embodied not as a rewritable optical recording medium which enables formation of an irreversible record mark in a phase-change material layer, but as a write-once, read-many-times optical recording medium which enables formation of an irreversible record mark in the reproduction layer (a noble metal oxide layer) (see Non-Patent Document 2).

The reason why a minute record mark, which is smaller than a resolution limit, can be formed in a noble metal oxide layer is that the noble metal oxide layer is locally decomposed at the high-energy area in the center of the beam post and that the thus-decomposed area is plastically deformed by bubble pits resulting from local decomposition of the noble metal oxide layer. The plastically-deformed area is used as a record mark, and a non-plastically-deformed area is used as a blank area. Meanwhile, the reason why data can be reproduced from the thus-formed minute record mark has not been made evident thus far. As described in Non-Patent Document 2, a superior signal characteristic is obtained through super-resolution reproduction involving use of a laser beam of a wavelength of 635 nm and an objective leans of a numerical aperture of 0.6. The laser beam having a wavelength of 635 nm and the objective lens having a numerical aperture of 0.6 are optical systems used in reproduction and recording operations of the DVD as mentioned previously. Therefore, even in the super-resolution-type optical recording medium, higher recording density and a higher data transfer rate can be presumed to be acquired by use of a laser beam having a shorter wavelength and an objective lens having a greater numerical aperture, as in the case of an optical recording medium of the next generation.

[Non-Patent Document 1] "Near-field recording and readout technology using a metallic probe in an optical disk," Japanese Journal of Applied Physics," 2000, Volume 39, pp. 980 to 981.

[Non-Patent Document 2] "Rigid bubble pit formation and huge signal enhancement in super-resolution near-field structure disk with platinum-oxide layer," Applied Physics Letters, American Institute of Physics, December 16, 2002, Volume 81, Number 25, pp. 4697-4699.

However, as mentioned previously, a mechanism which enables reproduction of data from a record mark, which is smaller than a resolution limit, in a super-resolution-type optical recording medium is not obvious. It is uncertain that super-resolution reproduction is feasible even when a laser beam having a wavelength of less than 635 nm and an objective lens having a numerical aperture of 0.6 are used. Provided that super-resolution reproduction is feasible, prediction of settings at which a superior signal characteristic is achieved; namely, a layered structure, materials of respective layers, and the thickness of the respective layers, is practically impossible.

<Disclosure of the Invention>

Consequently, the object of the invention is to provide an super-resolution-type optical recording medium having a noble metal oxide layer which enables super-resolution recording and super-resolution reproduction by use of a laser beam of shorter wavelength and an objective lens having a larger numerical aperture, as well as to provide a method for manufacturing the optical recording medium.

Another object of the present invention is to provide an super-resolution-type optical recording medium having a noble metal oxide layer which enables super-resolution recording and super-resolution reproduction by use of an optical system for use with an optical recording medium of the next generation type; namely, a laser beam having a wavelength of about 405 nm and an objective lens having a numerical aperture of about 0.85, as well as to provide a method for manufacturing the optical recording medium.

Yet another object of the present invention is to provide a method for recording and reproducing data from an super-resolution-type optical recording medium by use of a laser beam of a shorter wavelength and an objective lens having a greater numerical aperture.

An optical recording medium according to one aspect of the present invention comprises a support substrate and an optical transmitting layer; and a first dielectric layer, a noble metal oxide layer, a second dielectric layer, a light absorbing layer, and a third dielectric layer are interposed, in this sequence from the optical transmitting layer, between the optical transmitting layer and the support substrate. The thickness of the support substrate is ranging from 0.6 mm to 2.0 mm; the thickness of the optical transmitting layer is ranging from 10 $\mu$m to 200 $\mu$m; the thickness of the noble metal oxide layer is ranging from 2 nm to 50 nm; the thickness of the second dielectric layer is ranging from 5 nm to 100 nm; the thickness of the light absorbing layer is ranging from 5 nm to 100 nm; and the thickness of the third dielectric layer is ranging from 10 nm to 140 nm.

According to the present invention, $\lambda$/NA is set to 640 nm or less by use of a laser beam having a wavelength ($\lambda$) of less than 635 nm and an objective lens having a numerical aperture (NA) greater than 0.6, so that super-resolution recording and super-resolution reproduction can be performed. Particularly, a superior characteristic can be acquired through super-resolution recording and super-resolution reproduction involving use of a laser beam, which is used for an optical recording medium of the next generation and has a wavelength of about 405 nm, and an objective lens having a numerical aperture of 0.85.

The thickness of the support substrate is preferably set to a range from 1.0 mm to 1.2 mm, particularly preferable, to a value of about 1.1 mm. The thickness of the optical transmitting layer is preferably set to a range of 50 $\mu$m to 150 $\mu$m, and particularly preferably to a range of 70 $\mu$m to 120 $\mu$m. So long as the support substrate and the optical transmitting layer are set to these thicknesses, compatibility with the currently-proposed optical recording medium of the next generation type can be imparted to the optical recording medium.

Further, the thickness of the second dielectric layer is set preferably to a range of 20 nm to 100 nm; more preferably to a range of 50 nm to 100 nm; and particularly preferably a range of 50 nm to 70 nm. So long as the thickness of the second dielectric layer is set to these values, deformation, which would arise during recording operation, cannot be excessively hindered while the noble metal oxide layer is sufficiently protected. Especially, so long as the thickness of the second dielectric layer is set to a range of 50 nm to 70 nm, a high carrier-to-noise ratio (CNR) can be acquired.

Moreover, the noble metal oxide layer preferably includes a platinum oxide (PtOx). In this case, most preferably, essentially all of the noble metal oxide layer is made from platinum oxide (PtOx), and the noble metal oxide layer may contain another material or impurities, which are inevitably mixed into the noble metal oxide. If a platinum oxide (PtOx) is used as a material for the noble metal oxide layer, a superior signal characteristic and sufficient durability can be achieved.

The optical recording medium of the present invention preferably further comprises a reflection layer interposed between the support substrate and the third dielectric layer. An increase in the level of the reproduced signal and significant enhancement of reproduction stability can be attained, so long as such a reflection layer is provided. Here, the term "reproduction stability" means durability with regard to a phenomenon of reproduction deterioration; namely, a phenomenon of the status of a noble metal oxide layer being changed by energy of the laser beam irradiate during reproduction operation, which in turn induces an increase in noise and a decrease in carriers, to thus decrease the CNR. The thickness of the reflection layer preferably ranges from 5 nm to 200 nm; more preferably 10 nm to 100 nm; and most preferably 10 nm to 50 nm. By means of setting the thickness of the reflection layer in the above-mentioned manner, an effect of sufficiently enhancing reproduction stability can be achieved without involvement of a great decrease in productivity.

Much preferably, the thickness of the support substrate ranges from 1.0 mm to 1.2 mm; the thickness of the optical transmitting layer ranges from 70 $\mu$m to 120 $\mu$m; the thickness of the noble metal oxide layer ranges from 2 nm to 30 nm; the thickness of the second dielectric layer ranges from 50 nm to 100 nm; the thickness of the light absorbing layer ranges from 10 nm to 80 nm; the thickness of the third dielectric layer ranges from 20 nm to 120 nm; and the thickness of the reflection layer ranges from 10 nm to 50 nm. So long as the thickness of the support substrate and the thicknesses of the respective layers are set as mentioned above, a very superior characteristic can be acquired through super-resolution recording and super-resolution reproduction involving use of a laser beam having a wavelength of 405 nm and an objective lens having a numerical aperture of 0.85.

An optical recording medium according to another aspect of the present invention comprises a support substrate whose thickness ranges from 0.6 mm to 2.0 mm and an optical transmitting layer whose thickness ranges from 10 $\mu$m to 200 $\mu$m; and a first dielectric layer, a noble metal oxide layer, a second dielectric layer, a light absorbing layer, a third dielectric layer, and a reflection layer are interposed, in this sequence from the optical transmitting layer, between the optical transmitting layer and the support substrate. Even in this case, platinum oxide (PtOx) is preferably used as a material for a noble metal oxide layer. The thicknesses of the respective layers are preferably set as mentioned previously.

A method for manufacturing an optical recording medium according to the present invention is characterized by comprising: a first process of forming, on a support substrate, a reflection layer, a third dielectric layer, a light absorbing layer, a second dielectric layer, a noble metal oxide layer, and a first dielectric layer, in this sequence; and a second process of forming an optical transmitting layer on the first dielectric layer. According to the present invention, an optical recording medium which can effect super-resolution recording and super-resolution reproduction can be manufactured by setting $\lambda$/NA to 640 nm or less, through use of a laser beam having a wavelength of less than about 635 nm and an objective lens having a numerical aperture greater than 0.6. Processing pertaining to the first process is preferably performed according to a vapor-phase deposition method, and processing pertaining to the second process is preferably performed according to a spin-coating method.

A data recording method of the present invention is a data recording method for recording data on the above-described optical recording medium by exposing the optical transmitting layer to a laser beam, and is characterized in that, when the wavelength of the laser beam is taken as $\lambda$ and a numerical aperture of the objective lens used for focusing the laser beam is taken as NA, a record mark train including a record mark having a length of $\lambda$/4NA or less is recorded by setting $\lambda$/NA to a value of 640 nm or less. A data reproduction method of the present invention is for reproducing data by exposing the optical transmitting layer to a laser beam, and is characterized by setting $\lambda$/NA to a value of 640 nm or less when the wavelength of the laser beam is taken as $\lambda$ and the numerical aperture of the objective lens for focusing the laser beam is taken as NA, to thus reproduce data from a record mark train having a length of $\lambda$/4N. In any of the cases, setting the wavelength of the laser beam to a value of about 405 nm and setting a numerical aperture of the objective lens to a value of about 0.85 are most preferable. Thereby, a recording/reproducing device analogous to the recording/reproducing device for use with an optical recording medium of next generation type can be used. Cost for developing and manufacturing the recording/reproducing device can be curtailed.

According to the present invention, as a result of use of the laser beam having a wavelength of less than about 635 nm and an objective lens having a numerical aperture greater than 0.6, super-resolution recording and super-resolution reproduction can be performed while $\lambda$/NA is set to a value of 640 nm or less. Particularly, a superior characteristic can be acquired through super-resolution recording and super-resolution reproduction involving use of a laser beam having a wavelength of about 405 nm used with an optical recording medium of next generation type and an objective lens having a numerical aperture of 0.85. Consequently, a recording/reproducing device analogous to the recording/reproducing device for use with an optical recording medium of the next generation type can be used, and hence cost for developing and manufacturing a recording/reproducing device can be curtailed.

<Brief Description of the Drawings>

Fig. 1(a) is a partially-cross section view showing the appearance of an optical recording medium 10 according to a preferred embodiment of the present invention, and Fig. 1(b) is an enlarged fragmentary cross-sectional view of a section A shown in Fig. 1(a);

Fig. 2 is a view diagrammatically showing a state where the optical recording medium 10 is exposed to a laser beam 40;

Fig. 3 (a) is a plan view showing a beam spot of a laser beam 40 on a noble metal oxide layer 23, and Fig. 3(b) is a view for describing an intensity distribution of the beam spot;

Fig. 4 is a view for describing the size of an air bubble 23 a (a record mark);

Fig. 5 is a waveform chart showing an example of an intensity modulation pattern of the laser beam 40 acquired during recording operation;

Fig. 6 is a waveform chart showing another example of an intensity modulation pattern of the laser beam 40 acquired during recording operation;

Fig. 7 is a graph diagrammatically showing a relationship between recording power of the laser beam 40 and a CNR of a reproduced signal acquired through subsequent reproducing operation;

Fig. 8 is a graph diagrammatically showing a relationship between reproducing power of the laser beam 40 and the CNR;

Fig. 9 is a graph showing a measurement result acquired through evaluation 1 of a characteristic;

Fig. 10 is a graph showing a measurement result acquired through evaluation 2 of a characteristic;

Fig. 11 is a graph showing a measurement result acquired through evaluation 3 of a characteristic;

Fig. 12 is a graph showing a measurement result (an initial spectrum) acquired through evaluation 4 of a characteristic, wherein Fig. 12(a) shows a result concerning an optical recording medium sample of a first embodiment and Fig. 12(b) shows a result concerning an optical recording medium sample of a second embodiment; and

Fig. 13 is a graph showing a measurement result acquired through evaluation 4 of a characteristic (a spectrum acquired through 4000 repeated reproduction operations), wherein Fig. 13(a) shows a result concerning the optical recording medium sample of the first embodiment and Fig. 13(b) shows a result concerning the optical recording medium sample of the second embodiment.

<Best Modes for Implementing the Invention>

Preferred embodiments of the present invention will be described in detail hereinbelow by reference to the accompanying drawings.

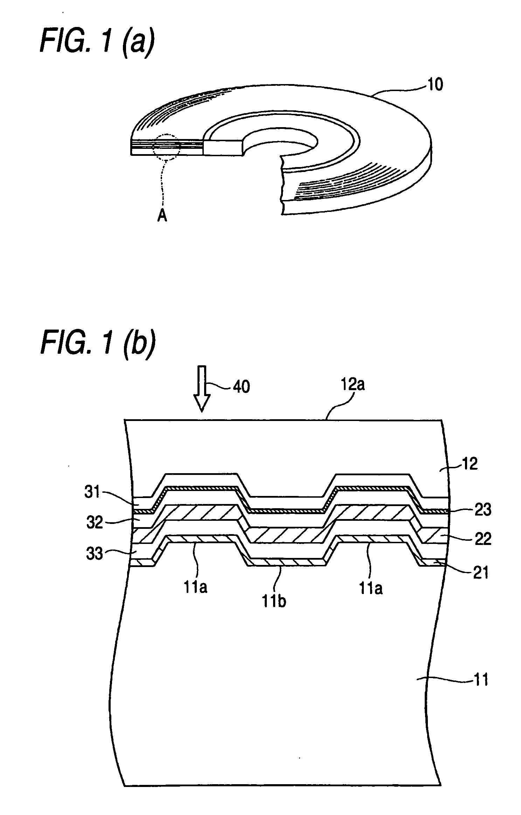

Fig. 1(a) is a partially-cross section view showing the appearance of an optical recording medium 10 according to a preferred embodiment of the present invention, and Fig. 1(b) is an enlarged fragmentary cross-sectional view of a section A shown in Fig. 1(a).

As shown in Fig. 1(a), the optical recording medium 10 of the present embodiment assumes the shape of a disc. As shown in Fig. 1(b), the optical recording medium 10 comprises a support substrate 11; an optical transmitting layer 12; a reflection layer 21, a light absorption layer 22, and a noble metal oxide layer 23, all of which are sandwiched in this sequence between the support substrate 11 and the optical transmitting layer 12; a dielectric layer 33 interposed between the reflection layer 21 and the light absorption layer 22; a dielectric layer 32 interposed between the light absorption layer 22 and the noble metal oxide layer 23; and a dielectric layer 31 interposed between the noble metal oxide layer 23 and the optical transmitting layer 12. Recording and reproduction of data can be performed by exposing a light entrance face 12a to a laser beam 40 while the optical recording medium 10 is being rotated. The laser beam 40 can be set to a wavelength of less than 635 nm, and is most preferably to a wavelength of about 405 nm, which is used for an optical recording medium of the next generation. The numerical aperture of the objective lens used for focusing the laser beam 40 can be set to a value greater than 0.6, and is particularly set to a value of 0.85 or thereabouts used for the optical recording medium of the next generation type.

The support substrate 11 is a disk-shaped substrate used for ensuring mechanical strength sought for the optical recording medium 10. Grooves 11a and lands 11b, which are used for guiding the laser beam 40, are spirally formed in one face of the support substrate 11 from the neighborhood of the center of the substrate to an outer brim of the same or from the outer brim to the neighborhood of the center. No specific limitations are imposed on the material and thickness of the support substrate 11, so long as mechanical strength of the support substrate can be assured. For instance, glass, ceramics, resin, or the like can be used as the material of the support substrate 11. In consideration of ease of molding, use of resin is preferable. Such resin includes polycarbonate resin, olefin resin, acrylic resin, epoxy resin, polystyrene resin, polyethylene resin, polypropylene resin, silicon resin, fluorine-based resin, ABS resin, urethane resin, and the like. Above all, use of polycarbonate resin or olefin resin is particularly preferable in view of easiness of molding. Since the support substrate 11 does not form an optical path for the laser beam 40, there is no necessity for selecting a material having a high light transmission characteristic in the wavelength range of the laser beam.

Meanwhile, the thickness of the support substrate 11 is preferably set to a thickness which is required and sufficient for ensuring mechanical strength; for instance, a range of 0.6 mm to 2.0 mm. In consideration of compatibility between the current optical recording medium and the optical recording medium of next generation type, the thickness of the support substrate 11 is preferably set to a range from 1.0 mm to 1.2 mm and particularly to a value of about 1.1 mm. No specific limitations are imposed on the diameter of the support substrate 11. In consideration of compatibility between the current optical recording medium and the optical recording medium of the next generation, the diameter of the support substrate 11 is preferably set to a value of 120 mm.

The optical transmitting layer 12 is a layer which forms an optical path for the laser beam 40 irradiated during recording and reproducing operations. No specific limitations are imposed on the material of the optical transmitting layer, so long as the material exhibits a sufficiently high optical transmissivity in the wavelength region of the laser beam 40 used. For instance, optical transmitting resin, or the like, can be used. In the optical recording medium 10 of the present embodiment, the thickness of the optical transmitting layer 12 is set to a range of 10 $\mu$m to 200 $\mu$m. The reason for this is that the size of the beam on the light entrance face 12a becomes extremely small when the thickness of the optical transmitting layer 12 is less than 10 $\mu$m, which in turn makes extremely great the influence of flaws or dust, on the light entrance face 12a, on recording or reproducing operation. When the thickness of the optical transmitting layer 12 exceeds 200$\mu$m, difficulty is encountered in ensuring a tilt margin or suppressing a coma aberration. In consideration of compatibility with the optical recording medium of the next generation type, the thickness of the optical transmitting layer 12 is set preferably to a range of 50 $\mu$m to 150 $\mu$m and particularly preferably to a range of 70 $\mu$m to 120 $\mu$m.

The reflection layer 21 is a layer which plays a role of increasing the level of the reproduced signal and improving reproduction stability. Single metal, such as gold (Au), silver (Ag), copper (Cu), platinum (Pt), aluminum (Al), titanium (Ti), chromium (Cr), iron (Fe), cobalt (Co), nickel (Ni), magnesium (Mg), zinc (Zn), germanium (Ge), and the like, or alloys thereof can be used as the material of the reflection layer 21. No specific limitations are imposed on the thickness of the reflection layer 21. The thickness of the reflection layer 21 is preferably set to a range of 5 nm to 200 nm, more preferably a range of 10 nm to 100 nm, and most preferably a range of 10 nm to 50 nm. The reason for this is that an effect of enhancing reproduction stability is not sufficiently acquired when the thickness of the reflection layer 21 is less than 5 nm, and that, when the thickness of the reflection layer 21 exceeds 200 nm, film growth involves consumption of much time, to thus deteriorate productivity. No further improvement in the effect of enhancing reproduction stability is obtained. In contrast, a sufficient effect of enhancing reproduction stability can be acquired without involvement of a great decrease in productivity, so long as the thickness of the reflection layer 21 is set to a range of 10 nm to 100 nm, preferably a range of 10 nm to 50 nm. In the present invention, providing the optical recording medium with the reflection layer 21 is not indispensable, but the above-described effect can be achieved by providing the reflection layer.

The light absorption layer 22 chiefly plays a role of absorbing energy of the laser beam 40 and converting the energy into heat. A preferable material of the light absorption layer 22 exhibits great absorption in the wavelength range of the laser beam 40 used and has comparatively low hardness so as not to prevent deformation of the noble metal oxide layer 23 during recording operation. A material satisfying such requirements of the laser beam 40 having a wavelength of less than 635 nm includes a phase-change material used as a material of a recording layer in a rewritable optical recording medium. Alloys of antimony (Sb), tellurium (Te), and germanium (Ge), or materials formed by addition of additives to the alloys are preferable as the phase-change material.

Specifically, provided that an atomic ratio of phase-change materials forming the light absorption layer 22 is expressed as

$$(Sb_aTe_{1-a})_{1-b}M_b$$

or

$$\{(GeTe)_c(Sb_2Te_3)_{1-c}\}_dM_{1-d}$$

[where M denotes elements exclusive of antimony (Sb), tellurium (Te) and germanium (Ge)], the atomic ratio is preferably set to fall within a range such that

$$0 \leq a \leq 1, \text{ and } 0 \leq\ b \leq 0.25$$

or

$$1/3 \leq c \leq 2/3, \text{ and } 0.9 \leq d.$$

Particularly, when the value of "b" has exceeded 0.25, a light absorption coefficient may become lower than a level required by the light absorption layer 22, and thermal conductivity may become lower than the value required by the light absorption layer 22, as well. Hence, the value of "b" preferably does not exceed 0.25.

Although no specific limitations are not imposed on the type of the element M, it is preferable to select one element or two or more elements from the group consisting of indium (In), silver (Ag), gold (Au), bismuth (Bi), selenium (Se), aluminum (Al), phosphor (P), hydrogen (H), silicon (S), carbon (C), vanadium (V), tungsten (W), tantalum (Ta), zinc (Zn), manganese (Mn), titanium (Ti), tin (Sn), palladium (Pd), lead (Pb), nitrogen (N), oxygen (O), and rare-earth metals [scandium (Sc), yttrium (Y), and lanthanoid]. Particularly, when a laser beam having a wavelength of 390 nm to 420 nm is used, it is preferable to select as the element M one element or two or more elements from the group consisting of silver (Ag), indium (In), and rare-earth elements. As a result, a superior signal characteristic can be acquired when a laser beam has a wavelength of 390 nm to 420 nm, particularly a laser beam has a wavelength of about 405 nm, is used.

Even when a phase-change material is used as the material of the light absorption layer 22, a phase change due to recording hardly appears as a signal. This is the reason why using the phase-change material as the material of the light absorption layer 22 is not indispensable. However, the inventor has ascertained thus far that the best signal characteristic is acquired when the phase-change material is used as the material of the light absorption layer 22, particularly a phase-change material which has the above-described composition.

When the phase-change material is used as the material of the light absorption layer 22, the thickness of the same is preferably set to a range of 50 nm to 100 nm, more preferably a range of 10 nm to 80 nm, and most preferably a range of 10 nm to 60 nm. The reason for this is that sufficient absorption of energy of the laser beam may fail to be attained when the thickness of the light absorption layer 22 is less than 5 nm, and that film growth involves consumption of much time and productivity drops when the thickness of the light absorption layer exceeds 100 nm. In contrast, if the thickness of the light absorption layer 22 is set to a range of 10 nm to 80 nm, particularly a range of 10 nm to 60 nm, the energy of the laser beam 40 can be sufficiently absorbed while high productivity is ensured.

The noble metal oxide layer 23 is a layer where a record mark is formed upon exposure to the laser beam 40, and contains a noble metal oxide as the principal constituent. Although no specific limitations are imposed on the type of noble metal, at least one type among platinum (Pt), silver (Ag), and palladium (Pd) is preferable. Platinum (Pt) is particularly preferable. Specifically, platinum oxide (PtOx) is particularly preferable as the material of the noble metal oxide layer 23. Acquisition of a superior signal characteristic and sufficient durability becomes possible, so long as platinum oxide (PtOx) is used as the material of the noble metal oxide layer 23. When platinum oxide (PtOx) is used as the material of the noble metal oxide layer 23, the value of "x" is preferably set such that an extinction coefficient (k) becomes smaller than 3 (k<3) in the wavelength range of the laser beam 40 used.

The thickness of the noble metal oxide layer 23 exerts great influence on the signal characteristic. In order to achieve a superior signal characteristic, the thickness of the noble metal oxide layer is preferably set to a range of 2 nm to 50 nm, more preferably a range of 2 nm to 30 nm. In order to acquire a particularly-superior signal characteristic, the thickness of the noble metal oxide layer is preferably set to a range of 2 nm to 8 nm, more preferably a range of 3 nm to 6 nm, and particularly preferably to a value of about 4 nm. In a case where the thickness of the noble metal oxide layer 23 is smaller than 2 nm or in excess of 50 nm, a record mark having a superior geometry cannot be formed even when the noble metal oxide layer is exposed to the laser beam 40, and a sufficient carrier-to-noise ratio (CNR) may fail to be acquired. In contrast, so long as the thickness of the noble metal oxide layer 23 is set to a range of 3 nm to 30 nm, preferably a value of about 4 nm, a record mark having a superior geometry can be formed, thereby enabling acquisition of a high CNR.

The dielectric layers 31, 32, and 33 chiefly play the role of physically and chemically protecting respective adjacent layers and adjusting an optical characteristic. Throughout the specification, the dielectric layers 31, 32, and 33 are often called a first dielectric layer, a second dielectric layer, and a third dielectric layer. Oxides, sulfides, nitrides, or combinations thereof are used as the principal constituent of materials for the dielectric layers 31, 32, and 33. Specifically, oxides, nitrides, sulfides, or carbides of aluminum (Al), silicon (Si), cerium (Ce), titanium (Ti), zinc (Zn), or tantalum (Ta), such as $Al_2O_3$, AlN, ZnO, ZnS, GeN, GeCrN, $CeO_2$, SiO, $SiO_2$, $Si_3N_4$, SiC, $La_2O_3$, TaO, $TiO_2$, SiAlON (mixtures of $SiO_2$, $Al_2O_3$, $Si_3N_4$, and AlN), LaSiON (mixtures of $La_2O_3$, $SiO_2$, and $Si_3N_4$, or the like), or mixtures thereof are preferably used. Particularly, use of a mixture consisting of ZnS and $SiO_2$ is more preferable. In such a case, a ratio of ZnS is preferably set to a range of 70 mol% to 90 mol%; a ratio of $SiO_2$ is preferably set to a range of 10 mol% to 30 mol%; and a mol ratio of ZnS to $SiO_2$ is most preferably set to about 80:20.

The dielectric layers 31, 32, and 33 may be formed from the same material, or some or all of them may be formed from different materials. Moreover, at least one of the dielectric layers 31, 32, and 33 may be formed from a multilayer structure comprising a plurality of layers.

The thickness of the dielectric layer 33 is preferably set to a range of 10 nm to 140 nm, more preferably to a range of 20 nm to 120 nm. The reason for this is that, when the thickness of the dielectric layer 33 is smaller than 10 nm, there arises a fear of a failure to sufficiently protect the light absorption layer 22, and that, when the thickness of the dielectric layer 33 exceeds 140 nm, productivity is deteriorated as a result of film growth involving consumption of much time. In contrast, so long as the thickness of the dielectric layer 33 is set to a range of 20 nm to 120 nm, the light absorption layer 22 can be effectively protected while high productivity is ensured.

The thickness of the dielectric layer 32 is preferably set to a range of 5 nm to 100 nm, more preferably to a range of 20 nm to 100 nm. The reason for this is that the dielectric layer 32 may be broken during decomposition of the noble metal oxide layer 23 when the thickness of the dielectric layer 32 is smaller than 5 nm, to thus fail to protect the noble metal oxide layer 23, and that the noble metal oxide layer 23 may fail to be sufficiently deformed during recording when the thickness of the dielectric layer 32 exceeds 100 nm. In contrast, so long as the thickness of the dielectric layer 32 is set to a range of 20 nm to 100 nm, the dielectric layer does not excessively hinder deformation, which arises during recording operation, while sufficiently protecting the noble metal oxide layer 23. Further, the thickness of the dielectric layer 32 affects the signal characteristic acquired during reproduction. A high CNR can be acquired, so long as the thickness of the dielectric layer 32 to a range of 50 nm to 70 nm and particularly to a value of about 60 nm.

The essential requirement is to set the thickness of the dielectric layer 31 according to required reflectivity, so long as the noble metal oxide layer 23 can be sufficiently protected. For instance, the thickness of the dielectric layer 31 is preferably set to a range of 30 nm to 120 nm, more preferably to a range of 50 nm to 100 nm, and most preferably to a value of about 70 nm. The reason for this is that, when the thickness of the dielectric layer 31 is smaller than 30 nm, the noble metal oxide layer 23 cannot be sufficiently protected, and that, when the thickness of the dielectric layer 31 exceeds 120 nm, productivity is deteriorated as a result of film growth involving consumption of much time. In contrast, so long as the thickness of the dielectric layer 31 is set to a range of 50 nm to 100 nm and particularly to a value of about 70 nm, the noble metal oxide layer 23 can be sufficiently protected while high productivity is ensured.

The above-descried is the structure of the optical recording medium 10.

During manufacture of the optical recording medium 10 having such a structure, the support substrate 11 is first prepared, and the reflection layer 21, the dielectric layer 33, the light absorption layer 22, the dielectric layer 32, the noble metal oxide layer 23, the dielectric layer 31, and the optical transmitting layer 12 can be sequentially formed in the face of the support substrate 11 where the grooves 11a and the lands 11b are formed. Specifically, during manufacture of the optical recording medium 10, films are sequentially formed from the face opposite to the light entrance face 12a, as in the case of the optical recording medium of the next generation.

Formation of the reflection layer 21, the dielectric layer 33, the light absorption layer 22, the dielectric layer 32, the noble metal oxide layer 23, and the dielectric layer 31 can be performed by vapor phase deposition using a chemical species containing these constituent elements; for example, sputtering or vacuum evaporation. Above all, use of sputtering is preferable. Meanwhile, the optical transmitting layer 12 can be formed by forming a coating from, e.g., an acrylic or epoxy-based ultraviolet cure resin whose viscosity has been adjusted, by means of the spin-coating method, and exposing the coating to ultraviolet in a nitrogen atmosphere to thus cure the coating. Alternatively, the optical transmitting layer 12 may be formed not by the spin-coating method, but by use of an optical transmitting sheet containing optical transmitting resin as the principal constituent and various bonding agents and pressure-sensitive adhesives.

A hard coating layer may be provided on the surface of the optical transmitting layer 12, thereby protecting the surface of the optical transmitting layer 12. In this way, the surface of the hard coating layer forms the light entrance surface 12a. For instance, ultraviolet cure resin containing an epoxy acrylate oligomer (bifunctional oligomer), multifunctional acrylic monomer, monofunctional acrylic monomer, and a photopolymerization initiator; or oxides, nitrides, sulfides, or carbides of aluminum (Al), silicon (Si), cerium (Ce), titanium (Ti), zinc (Zn), tantalum (Ta), or mixtures thereof are used as a material for the hard coating layer. When an ultraviolet cure resin is used as a material of the hard coating layer, the ultraviolet cure resin is preferably formed over the optical transmitting layer 12 by the spin-coating method. When the oxides, the nitrides, the sulfides, the carbides, or the mixtures thereof are used, vapor phase deposition using chemical species including the above-described constituent elements; for example, sputtering or vacuum deposition, can be used. Among others, use of sputtering is preferable.

Since the hard coating layer plays the role of preventing infliction of flaws on the light entrance face 12a, the hard coating layer preferably has lubricity as well as hardness. In order to impart lubricity to the hard coating layer, it is effective to cause a material (e.g., $SiO_2$), which is to become a base material of the hard coating layer, to contain a lubricant. A silicon-based lubricant, a fluorine-based lubricant, or a fatty-acid-ester-based lubricant is preferably selected as a lubricant. The lubricant content is preferably set to a range from 0.1 mass percent to 5.0 mass percent.

The method for and principle employed in recording data on the optical recording medium 10 of the present embodiment will now be described.

Data are recorded on the optical recording medium 10 by exposing the noble metal oxide layer 23 to the laser beam 40 having a wavelength of less than 635 nm, preferably a wavelength of about 405 nm used for an optical recording medium of the next generation type, by way of the light entrance face 12a while the optical recording medium 10 is being rotated. In this case, an objective lens having a numerical aperture of 0.6-plus, particularly, an objective lens which is used for an optical recording medium of next generation type and has a numerical aperture of about 0.85, can be used as the objective lens for focusing the laser beam 40. Specifically, data can be recorded by use of an optical system analogous to the optical system used for the optical recording medium of next generation type.

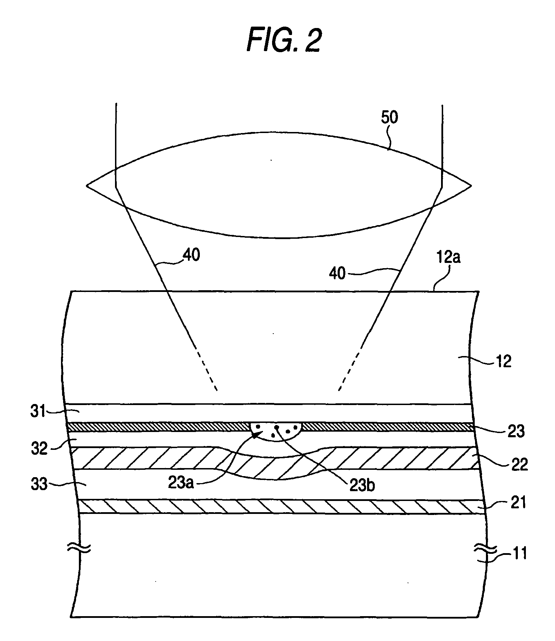

Fig. 2 is an essential cross-sectional view diagrammatically showing the state of the optical recording medium 10 exposed to the laser beam 40. The cross section of the optical recording medium 10 shown in Fig. 2 corresponds to a cross section taken along the groove 11 a and the land 11b.

As shown in Fig. 2, the laser beam 40 having the above-described wavelength is focused by an objective lens 50 having the above-described numerical aperture, and is irradiated onto the optical recording medium 10, whereupon the noble metal oxide layer 23 is decomposed at the center of the beam spot, and bubble pits 23 a filled with an oxygen gas ($O_2$) are generated. Fine particles 23b of constituent metal are dispersed in the bubble pits 23a. At this time, layers existing around the bubble pits 23a are plastically deformed by pressures of the bubble pits, and hence the bubble pits 23 a can be used as irreversible record marks. For example, when the material of the noble metal oxide layer 23 is a platinum oxide (PtOx), the platinum oxide (PtOx) decomposes into platinum (Pt) and an oxygen gas ($O_2$) at the center of the beam spot, whereby platinum (Pt) fine particles are dispersed in the bubble pits 23a. Of the noble metal oxide layer 23, areas where no bubble pits 23a are generated act as blank regions.

Decomposition of the noble metal oxide layer 23 does not arise in the area corresponding to the entirety of the beam spot. As mentioned previously, decomposition arises solely in the center of the beam spot. Consequently, the thus-generated bubble pits 23a (record marks) are smaller than the beam spot, whereby super-resolution recording is fulfilled. The reason why such super-resolution recording can be carried out is as follows:

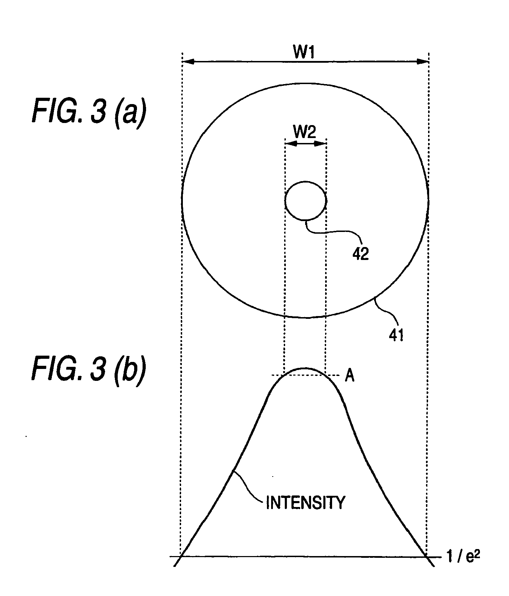

Fig. 3(a) is a plan view showing a beam spot of the laser beam 40 on the noble metal oxide layer 23, and Fig. 3(b) is a view showing the intensity distribution of the beam spot.

As shown in Fig. 3 (a), the plane geometry of the beam spot 41 is essentially circular. However, the intensity distribution of the laser beam 40 in the beam spot 41 is not uniform, but assumes a Gaussian distribution as shown in Fig. 3(b). Specifically, energy becomes greater with increased proximity to the center in the beam spot 41. Consequently, so long as a predetermined threshold value A is set so as to sufficiently exceed 1/e2 of the maximum intensity, a diameter W2 of the region 42—where intensity of greater than the threshold-value A is achieved—becomes sufficiently smaller than the diameter W1 of the beam spot 41. This implies that, so long as the noble metal oxide layer 23 has a characteristic of being decomposed upon exposure to the laser beam 40 having intensity greater than the threshold value A, the bubble pits 23 a (record marks) are selectively formed in only an area of the region exposed to the laser beam 40, the area corresponding to the region 42 in the beam spot 41.

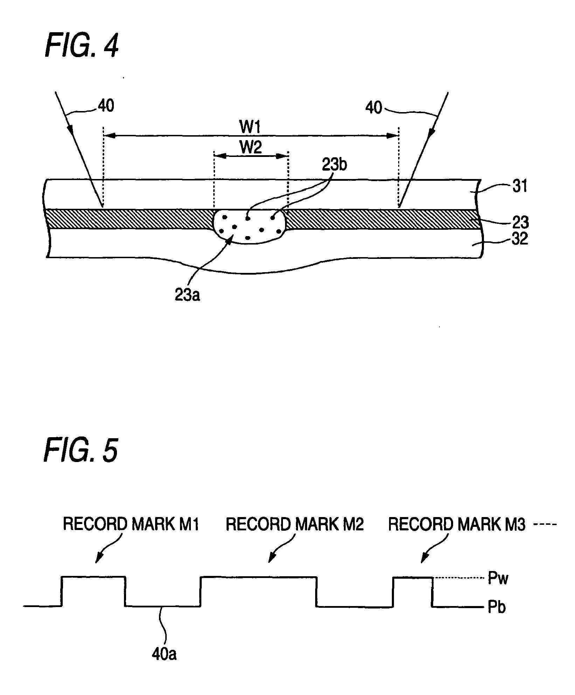

Thereby, as shown in Fig. 4, the bubble pits 23 a (record marks), which are sufficiently smaller than the diameter W1 of the beam spot, can be formed in the noble metal oxide layer 23, and the diameter of the bubble pits becomes essentially equal to W2. Specifically, the relationship between the diameter W2 of the apparent beam spot and the diameter W1 of the actual beam spot becomes W1 > W2, so that super-resolution recording is fulfilled. Since the platinum oxide (PtOx), which is the most desirable material for the noble metal oxide layer 23, has the property of decomposing upon being heated to 580°C, the intensity at which the noble metal oxide layer 23 is heated to 580°C by exposure becomes the threshold value A.

Therefore, so long as the laser beam 40 having modified intensity is irradiated onto the optical recording medium 10 along the grooves 11a and/or lands 11b while the optical recording medium 10 is being rotated, a minute record mark, which is smaller than the resolution limit, can be formed in a desired location on the noble metal oxide layer 23.

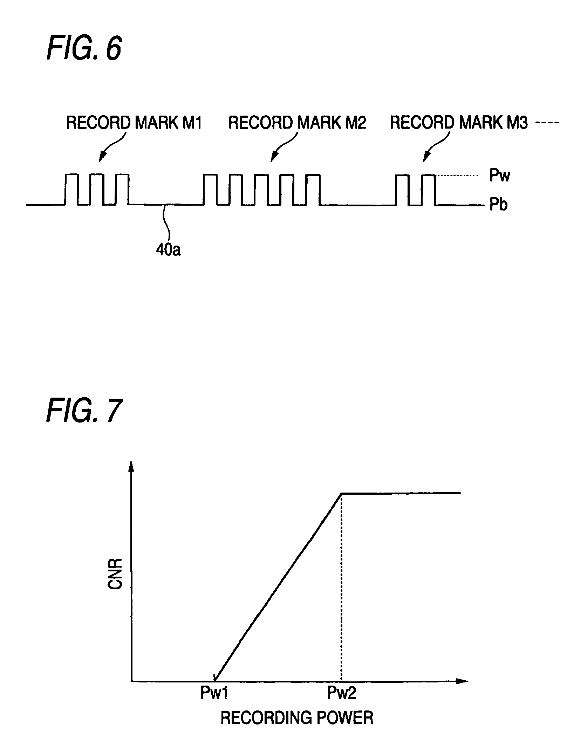

Fig. 5 is a waveform chart showing an example of an intensity modulation pattern of the laser beam 40 acquired during recording operation. As shown in Fig. 5, the intensity 40a of the laser beam 40 required during recording operation is set to recording power (= Pw) in regions where record marks M1, M2, M3, ... are to be formed, and is set to base power (= Pb) in regions (blank regions) where no record marks are to be formed. As a result, the bubble pits 23 a are formed through decomposition in the regions exposed to the laser beam 40 having recording power Pw in the noble metal oxide layer 23. Accordingly, the record marks M1, M2, M3, ..., each having a desired length, can be formed. An intensity modulation pattern of the laser beam 40 acquired during recording operation is not limited to that shown in Fig. 5. For instance, as shown in Fig. 6, the record marks M1, M2, M3, ... may be formed through use of divided pulse trains.

Fig. 7 is a graph diagrammatically showing a relationship between recording power of the laser beam 40 and the CNR of a reproduced signal obtained through subsequent reproducing operation.

As shown in Fig. 7, provided that the recording power of the laser beam 40 is less than Pw1, an effective reproduced signal is not obtained from the optical recording medium 10 even when reproducing operation is performed subsequently. A conceivable reason for this is that, when the recording power of the laser beam 40 is less than Pw1, the noble metal oxide layer 23 is not substantially decomposed. In the region where the recording power of the laser beam 40 is Pw1 to less than Pw2 (> Pw1), a higher CNR is acquired through subsequent reproducing operation as recording power is higher. A conceivable reason for this is that decomposition of the noble metal oxide layer 23 has partially arisen in the regions where the recording power of the laser beam 40 is Pw1 to less than Pw2, and that the extent of decomposition becomes greater as the recording power is higher. In the region where the recording power of the laser beam 40 is Pw2 or higher, no substantial changes arise in the CNR obtained through subsequent reproducing operation even when the recording power is increased any further. A conceivable reason for this is that, when the recording power of the laser beam 40 is Pw2 or higher, the noble metal oxide layer 23 is substantially, completely decomposed. In consideration of the above-mentioned reasons, setting the recording power of the laser beam 40 to Pw2 or higher can be said to be preferable.

The above-mentioned are the method for and principle employed in recording data on the optical recording medium 10.

When the thus-recorded data are reproduced, the essential requirement is to irradiate the laser beam 40 whose intensity is fixed to a predetermined level (reproducing power Pr) onto the optical recording medium 10 along the grooves 11a and/or lands 11b while the optical recording medium 10 is being rotated. An electrical signal corresponding to the recording mark train can be acquired so long as the obtained reflected light is subjected to photoelectric conversion. The reason why such super-resolution reproduction is feasible is not necessarily evident. An inferred reason for this is that, when laser beam 40 set to reproducing power is irradiate, some type of interaction arises between the laser beam 40 and the metal fine particles 23b existing in the bubble pits 23a, to thus enable super-resolution reproduction.

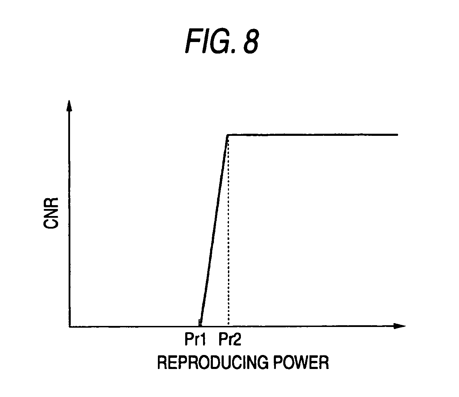

Fig. 8 is a graph diagrammatically showing a relationship between the reproducing power of the laser beam 40 and the CNR.

As shown in Fig. 8, when the reproducing power of the laser beam 40 is under Pr1, an effective reproduced signal is hardly obtained. However, when the reproducing power is set to Pr1 or higher, the CNR rapidly increases. When the reproducing power is increased to Pr2 (> Pr1), the CNR becomes saturated. The reason for occurrence of such a phenomenon is not necessarily evident. A conceivable reason for this is that interaction between the metal fine particles 23b and light arises or becomes noticeable as a result of radiation of the laser beam 40 being set to Pr1 or higher. Therefore, there is a necessity for setting the reproducing power of the laser beam 40 to Pr1 or higher and, preferably, the reproducing power is set to Pr2 or higher.

However, if the reproducing power is set too high, decomposition of the noble metal oxide layer 23 may arise in the blank regions. When such decomposition has arisen, significant reproduction deterioration will arise or data loss may arise in some cases. In consideration of this point, the reproducing power of the laser beam 40 is preferably set to Pr2 to less than Pw1.

Needless to say, the present invention is not limited to the above-described embodiments and is susceptible to various modifications within the scope of the invention described in claims, and the modifications fall within the scope of the present invention.

For instance, the structure of the optical recording medium 10 shown in Fig. 1 is a mere basic structure of the optical recording medium of the present invention. The structure of the optical recording medium of the present invention is not limited to that structure. For instance, another noble metal oxide layer may be provided on a part of the optical recording medium closer to the support substrate 11 when viewed from the light absorption layer 22, or another light absorption layer may be added to a part of the optical recording medium closer to the optical transmitting layer 12 when viewed from the noble metal oxide layer 23.

Moreover, various functional layers, such as the light absorption layer 22 or the noble metal oxide layer 23, are provided on both sides of the support substrate 11, thereby realizing a structure having recording faces on both sides. Alternatively, there can be realized a structure having a recording surface of two or more layers on a single side by stacking various functional layers into two layers or more on one side of the support substrate 11 by way of a transparent intermediate layer.

(Examples)

Examples of the present invention will be described hereunder. However, the present invention is not limited to the examples.

[Manufacture of samples]

First Example

An optical recording medium sample having the same structure as that of the optical recording medium 10 shown in Fig. 1 was manufactured by the following method.

First, the disc-shaped support substrate 11, which has a thickness of about 1.1 mm, a diameter of about 120 mm, and the grooves 11a and the lands 11b formed in a front face of the substrate, was formed from polycarbonate by means of injection molding.

Next, the support substrate 11 was set in a sputtering system. In the side of the support substrate where the grooves 11a and the lands 11b are formed, there were sequentially formed the reflection layer 21 which is formed essentially from platinum (Pt) and has a thickness of about 20 nm; the dielectric layer 33 which is formed essentially from a mixture consisting of ZnS and $SiO_2$ (a mol ratio of about 80:20) and has a thickness of about 100 nm; the light absorption layer 22 which is formed essentially from $Ag_aIn_bSb_cTe_d$ (a = 5.9, b = 4.4, c = 61.1, d = 28.6) and has a thickness of about 60 nm; the dielectric layer 32 which is formed essentially from a mixture consisting of ZnS and $SiO_2$ (a mol ratio of about 80:20) and has a thickness of about 60 nm; the noble metal oxide layer 23 which is formed essentially from a platinum oxide (PtOx) and has a thickness of about 4 nm; and the dielectric layer 31 which is formed essentially from a mixture consisting of ZnS and $SiO_2$ (a mol ratio of about 80:20) and has a thickness of about 70 nm by means of sputtering.

Here, at the time of formation of the noble metal oxide layer 23, platinum (Pt) was used as a target, and an oxygen gas ($O_2$) and an argon gas (Ar) were used as a sputtering gas (a flow ratio of 1:3). Internal pressure of a chamber was set to 0.14 Pa, and sputtering power was set to 200 W. An extinction coefficient (k) of the platinum oxide (PtOx) formed under the settings was about 1.96.

The dielectric layer 31 was coated with an acrylic ultraviolet cure resin by means of spin coating, and the coating was exposed to ultraviolet radiation, to thus form the optical transmitting layer 12 having a thickness of about 100 $\mu$m. Thus, the optical recording medium sample of the first example was completed.

Second Example

The reflection layer 21 was omitted. The thickness of the dielectric layer 33 was set to about 80 nm; the thickness of the dielectric layer 32 was set to about 40 nm; and the thickness of the dielectric layer 31 was set to about 100 nm. In other respects, an optical recording medium sample of a second example was produced in the same manner as was the optical recording medium of the first example.

Third Example

Except for the thickness of the noble metal oxide layer 23 having been set to about 2 nm, an optical recording medium sample of a third example was produced in the same manner as was the optical recording medium of the second example.

Fourth Example

Except for the thickness of the noble metal oxide layer 23 having been set to about 6 nm, an optical recording medium sample of a fourth example was produced in the same manner as was the optical recording medium of the second example.

Fifth Example

Except for the thickness of the noble metal oxide layer 23 having been set to about 8 nm, an optical recording medium sample of a fifth example was produced in the same manner as was the optical recording medium of the second example.

Sixth Example

Except for the thickness of the noble dielectric layer 32 having been set to about 20 nm and the thickness of the dielectric layer 31 having been set to about 120 nm, an optical recording medium sample of a sixth example was produced in the same manner as was the optical recording medium of the second example.

Seventh Example

Except for the thickness of the dielectric layer 32 having been set to about 60 nm and the thickness of the dielectric layer 31 having been set to about 60 nm, an optical recording medium sample of a seventh example was produced in the same manner as was the optical recording medium of the second example.

Thicknesses of the respective layers of the first through seventh examples are summarized in the following table.

[Table 1]

| | First Example | Second Example | Third Example | Fourth Example | Fifth Example | Sixth Example | Seventh Example |
|---|---|---|---|---|---|---|---|
| Dielectric layer 31 | 70 nm | 100 nm | 100 nm | 100 nm | 100 nm | 120 nm | 160 nm |
| Noble metal oxide layer 23 | 4 nm | 4 nm | 2 nm | 6 nm | 8 nm | 4 nm | 4 nm |
| Dielectric layer 32 | 60 nm | 40 nm | 40 nm | 40 nm | 40 nm | 20 nm | 60 nm |
| Light absorption layer 22 | 60 nm | 60 nm | 60 nm | 60 nm | 60 nm | 60 nm | 60 nm |
| Dielectric layer 33 | 100 nm | 80 nm | 80 nm | 80 nm | 80 nm | 80 nm | 80 nm |
| Reflection layer 21 | 20 nm | - | - | - | - | - | - |

[First Evaluation of Characteristic]

First, the optical recording medium sample of the first example and that of the second example were set in an optical disk evaluation system (DDU1000 manufactured by Pulstec Industrial Co., Ltd.). While the optical recording medium was being rotated at a linear velocity of about 6.0 m/s, a laser beam having a wavelength of about 405 nm was irradiate onto the noble metal oxide layers 23 from the light entrance faces 12a by way of an objective lens having a numerical aperture of about 0.85, to thus record a single signal having a predetermined record mark length and a blank length. The record mark length and the blank length were set to various values within a range from 50 nm to 320 nm. When the above-described optical system was used, a resolution limit given by the following equation is about 120 nm.

$$d2 = \lambda/4NA$$

In relation to the power of the laser beam 40 acquired during recording operation, recording power (Pw) of the laser beam was set to a level (optimal recording power) at which the highest CNR is achieved in any of the optical recording medium samples. The base power (Pb) was set to substantially 0 mW. A pattern shown in Fig. 5 was used as a pulse pattern for the laser beam 40.

The thus-recorded single signal was reproduced, and a CNR of the reproduced signal was measured. In relation to the reproducing power (Pr) of the laser beam 40 was set to a level (optimum reproducing power) at which the highest CNR is acquired in the respective optical recording medium samples. The optimum recording power and the optimum reproducing power of the respective optical recording medium samples are as shown in Table 2.

[Table 2]

| | First Example | Second Example | Third Example | Fourth Example | Fifth Example | Sixth Example | Seventh Example |
|---|---|---|---|---|---|---|---|
| Optimum recording power | 8.8 mW | 5.5 mW | 5.5 mW | 6.0 mW | 5.0 mW | 5.0 mW | 6.5 mW |
| Optimum reproducing power | 2.2 mW | 2.0 mW | 2.0 mW | 2.0 mW | 2.0 mW | 2.0 mW | 2.0 mW |

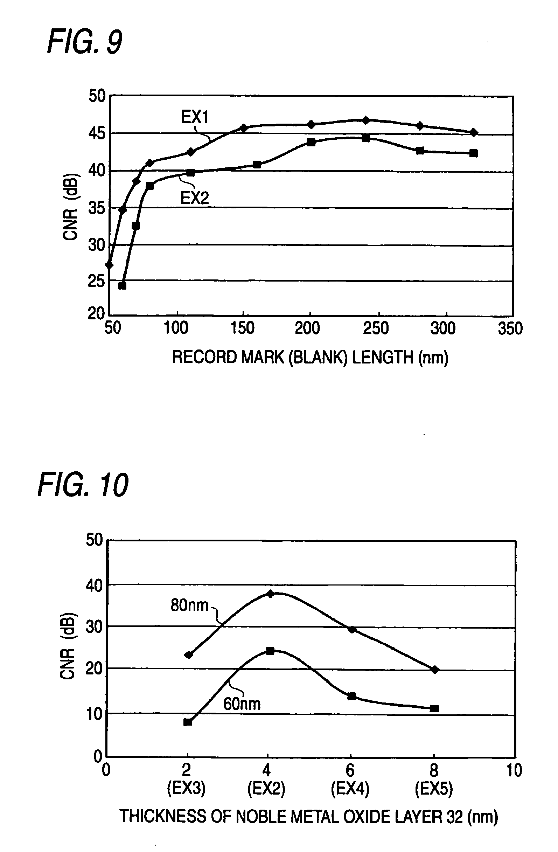

Fig. 9 shows measurement results of CNRs.

As shown in Fig. 9, in any of the optical recording medium samples of the first and second examples, high CNRs can be ascertained to have been obtained even when the record mark length and the blank length were smaller than the resolution limit (about 120 nm). For instance, even in a case where the record mark length and the blank length are 80 nm, a CNR of about 41 dB is obtained from the optical recording medium sample of the first example, and a CNR of about 37 dB is obtained from the optical recording medium sample of the second example. As a result, it was ascertained that super-resolution recording and super-resolution reproduction are possible, so long as the optical recording medium samples of the first and second examples are used.

As is evident from the results shown in Fig. 9, a particularly superior result is obtained from the optical recording medium sample of the first example. A conceivable reason for this is that the film thicknesses of the respective layers are optimized for the optical system when compared with the optical recording medium sample of the second example.

[Second evaluation of a characteristic]

Next, optical recording medium samples of the second to fifth examples were set in the above-described optical disk evaluation system. Under the same conditions as those used for the above-described "First evaluation of a characteristic," a single signal whose record mark length and blank length are 80 nm and a single signal whose record mark length and blank length are 60 nm were recorded. The optical recording medium samples of the second to fifth examples have the same structure, except that the noble metal oxide layers 23 have different thicknesses.

The thus-recorded single signals were reproduced, and CNRs of the thus-reproduced signals were measured. The reproducing power (Pr) of the laser beam 40 was set to the recording power levels optimum for the respective optical recording medium samples. Measurement results are shown in Fig. 10.

As shown in Fig. 10, a strong correlation between the thickness of the noble metal oxide layer 23 and the obtained CNR is ascertained. It was ascertained that the best CNR is obtained when the thickness of the noble metal oxide layer 23 is set to about 4 nm (the second example).

[Third evaluation of a characteristic]

Optical recording medium samples of the second example, the sixth example, and the seventh example were set in the above-described optical disk evaluation system. Under the same conditions as those used for the above-described "First evaluation of a characteristic," single signals having predetermined record mark lengths and predetermined blank lengths were recorded. The record mark lengths and the blank lengths were variously set within the scope from 60 nm to 320 nm. The optical recording medium samples of the second, sixth, and seventh examples have the same structure, except that the dielectric layers 31, 32 have different thicknesses.

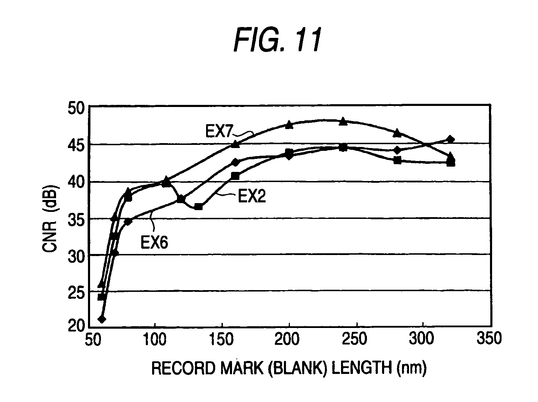

The thus-recorded single signals were reproduced, and CNRs of the thus-reproduced signals were measured. The reproducing power (Pr) of the laser beam 40 was set to the reproducing power levels optimum for the respective optical recording medium samples. Measurement results are shown in Fig. 11.

As shown in Fig. 11, a certain degree of correlation between the thickness of the dielectric layer 32 and the obtained CNR is ascertained. It was ascertained that the best CNR is obtained when the thickness of the dielectric layer 32 is set to about 60 nm (the seventh example).

[Fourth evaluation of a characteristic]

Next, of the single signals recorded in the optical recording medium samples of the first and second examples in the "First evaluation of a characteristic," a single signal whose record mark length and blank length are 80 nm was repeatedly reproduced, and spectra of the thus-obtained reproduced signals were measured. The reproducing power (Pr) of the laser beam 40 was set to the power level optimum for the respective optical recording medium samples.

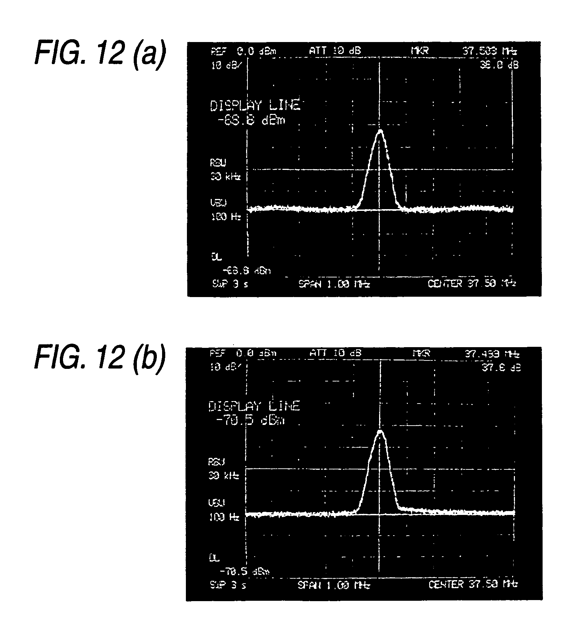

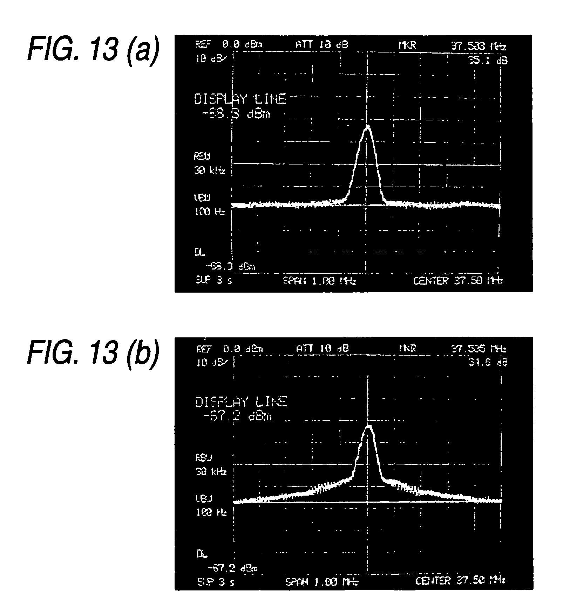

Initial spectra obtained from the optical recording medium samples of the first and second examples are shown in Figs. 12(a), 12(b), and spectra obtained after reproduction of the signal have been repeated 4000 times are shown in Figs. 13(a), 13(b).

As shown in Figs. 12(a), 12(b), no substantial difference is observed between the initial spectrum obtained from the optical recording medium sample of the first example and the initial spectrum obtained from the optical recording medium sample of the second example. However, as shown in Fig. 13(b), when reproduction operation has been repeated 4000 times, it is ascertained that the spectrum obtained in connection with the optical recording medium sample of the second example spreads, to thus have caused reproduction deterioration. In contrast, as shown in Fig. 13(a), the spectrum obtained in connection with the optical recording medium sample of the first example after reproduction of the signal has been repeated 4000 times is substantially identical with the initial spectrum, and is ascertained to have high reproduction stability. A conceivable reason why such a difference has arisen between the optical recording medium sample of the first example and the optical recording medium sample of the second example is attributable to presence or absence of the reflection layer 21.

By means of comprehensive determination of the evaluation results of the characteristics obtained through the first to fourth evaluations, the optical recording medium sample of the first example can be said to have the best characteristic.

<Industrial Applicability>

As has been described, according to the present examples, $\lambda$/NA is set to 640 nm or less by use of a laser beam having a wavelength of less than about 635 nm and an objective lens having a numerical aperture of about 0.6-plus, thereby enabling super-resolution recording and super-resolution reproduction. Particularly, a superior characteristic can be acquired through super-resolution recording and super-resolution reproduction involving use of a laser beam, whose wavelength is about 405 nm and which is to be used with an optical recording medium of the next generation type, and an objective lens having a numerical aperture of about 0.85. Consequently, a recording/reproducing device analogous to a recording/reproducing device for use with an optical recording medium of the next generation type can be used, and hence cost for developing and manufacturing the recording/reproducing device can be curtailed.

**Claims**

1. An optical recording medium comprising:

   a support substrate;
   an optical transmitting layer; and
   a first dielectric layer, a noble metal oxide layer, a second dielectric layer, a light absorption layer, and a third dielectric layer, all of which are interposed, in this sequence from said optical transmitting layer, between said optical transmitting layer and said support substrate,
   wherein a thickness of said support substrate ranges from 0.6 mm to 2.0 mm; a thickness of said optical transmitting layer ranges from 10 $\mu$m to 200 $\mu$m; a thickness of said noble metal oxide layer ranges from 2 nm to 50 nm; a thickness of said second dielectric layer ranges from 5 nm to 100 nm; a thickness of said light absorption layer ranges from 5 nm to 100 nm; and a thickness of said third dielectric layer ranges from 10 nm to 140 nm.

2. The optical recording medium according to claim 1, wherein said noble metal oxide layer includes a platinum oxide (PtOx).

3. The optical recording medium according to claim 1 or 2, further comprising a reflection layer interposed between said support substrate and said third dielectric layer.

4. The optical recording medium according to claim 3, wherein a thickness of said reflection layer ranges from 5 nm to 200 nm.

5. An optical recording medium comprising:

   a support substrate whose thickness ranges from 0.6 mm to 2.0 mm;
   an optical transmitting layer whose thickness ranges from 10 $\mu$m to 200 $\mu$m; and

a first dielectric layer, a noble metal oxide layer, a second dielectric layer, a light absorption layer, a third dielectric layer, and a reflection layer, all of which are interposed, in this sequence from said optical transmitting layer, between said optical transmitting layer and said support substrate.

6. A method for manufacturing an optical recording medium comprising:

a first process of forming, on a support substrate, a reflection layer, a third dielectric layer, a light absorption layer, a second dielectric layer, a noble metal oxide layer, and a first dielectric layer, in this sequence; and
a second process of forming an optical transmitting layer on said first dielectric layer.

7. The method for manufacturing an optical recording medium according to claim 6, wherein processing pertaining to said first process is performed according to a vapor-phase deposition method, and processing pertaining to said second process is performed according to a spin-coating method.

8. A data recording method for recording data on said above-described optical recording medium defined in any one of claims 1 to 5, by exposing the optical-transmissive layer to a laser beam, wherein, when the wavelength of said laser beam is taken as $\lambda$ and a numerical aperture of said objective lens used for focusing the laser beam is taken as NA, a record mark train including a record mark having a length of $\lambda/4NA$ or less is recorded by setting $\lambda/NA$ to a value of 640 nm or less.

9. A data reproduction method for reproducing data by exposing to a laser beam said optical recording medium defined in any one of claims 1 to 5 by way of said optical transmitting layer, wherein, when the wavelength of the laser beam is taken as $\lambda$ and the numerical aperture of the objective lens for focusing the laser beam is taken as NA, $\lambda/NA$ is set to a value of 640 nm or less to thus reproduce data from a record mark train having a length of $\lambda/4NA$.

## FIG. 1 (a)

## FIG. 1 (b)

## FIG. 2

*FIG. 3 (a)*

*FIG. 3 (b)*

## FIG. 4

W1

W2

23b

40

40

23a

31

23

32

## FIG. 5

RECORD MARK M1     RECORD MARK M2     RECORD MARK M3 ----

Pw

Pb

40a

## FIG. 6

RECORD MARK M1    RECORD MARK M2    RECORD MARK M3 ----

Pw

Pb

40a

## FIG. 7

CNR

Pw1          Pw2

RECORDING POWER

## FIG. 8

CNR

Pr1  Pr2

REPRODUCING POWER

## FIG. 9

## FIG. 10

## FIG. 11

*FIG. 12 (a)*

*FIG. 12 (b)*

FIG. 13 (a)

FIG. 13 (b)

<table>
<tr><td colspan="2" align="center">**INTERNATIONAL SEARCH REPORT**</td><td colspan="2">International application No.<br>PCT/JP2004/009492</td></tr>
</table>

A.  CLASSIFICATION OF SUBJECT MATTER
    Int.Cl⁷  G11B7/24

According to International Patent Classification (IPC) or to both national classification and IPC

B.  FIELDS SEARCHED

Minimum documentation searched (classification system followed by classification symbols)
    Int.Cl⁷  G11B7/24

Documentation searched other than minimum documentation to the extent that such documents are included in the fields searched

| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| P,A | JP 2004-111004 A  (National Institute of Advanced Industrial Science and Technology), 08 April, 2004 (08.04.04), Full text; all drawings (Family: none) | 1-9 |
| P,A | JP 2004-87073 A  (TDK Corp.), 18 March, 2004 (18.03.04), Full text; all drawings (Family: none) | 1-9 |
| P,A | JP 2004-39177 A  (National Institute of Advanced Industrial Science and Technology), 05 February, 2004 (05.02.04), Full text; all drawings (Family: none) | 1-9 |

| ☒ Further documents are listed in the continuation of Box C. | ☐ See patent family annex. |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>23 July, 2004 (23.07.04) | Date of mailing of the international search report<br>10 August, 2004 (10.08.04) |
| Name and mailing address of the ISA/<br>    Japanese Patent Office | Authorized officer |
| Facsimile No. | Telephone No. |

Form PCT/ISA/210 (second sheet) (January 2004)

**EP 1 640 981 A1**

<table>
<tr><td colspan="2">INTERNATIONAL SEARCH REPORT</td><td>International application No.<br>PCT/JP2004/009492</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| P,A | JP 2004-30891 A (Raitoku Kagi Kofun Yugen Koshi), 29 January, 2004 (29.01.04), Full text; all drawings & US 2003/228462 A1 | 1-9 |
| P,A | JP 2004-20822 A (National Institute of Advanced Industrial Science and Technology), 22 January, 2004 (22.01.04), Full text; all drawings (Family: none) | 1-9 |
| P,A | JP 2004-158134 A (Ricoh Co., Ltd.), 03 June, 2004 (03.06.04), Full text; all drawings (Family: none) | 1-9 |
| A | JP 6-262854 A (Konica Corp.), 20 September, 1994 (20.09.94), Full text; all drawings (Family: none) | 1-9 |

Form PCT/ISA/210 (continuation of second sheet) (January 2004)

28